# EUROPEAN PATENT SPECIFICATION

(11) **EP 0 564 179 B1**
(45) Date of publication and mention of the grant of the patent: **06.09.1995**
(21) Application number: 93302346.7
(22) Date of filing: 26.03.1993
(51) Int. Cl.: H01S 3/083, G01C 19/66

(54) **A lasing apparatus**
Laser-Apparat
Appareil laser

(30) Priority: 31.03.1992 GB 9206939
(43) Date of publication of application: 06.10.1993
(73) Proprietor: BRITISH AEROSPACE PUBLIC LIMITED COMPANY, Farnborough, Hants. GU14 6YU (GB)
(72) Inventor: Folkherd, Graham Charles, British Aerospace, Plymouth, Devon PL6 6DE (GB); Gripton, Andrew, British Aerospace, Plymouth, Devon PL6 6DE (GB); Mason, Timothy Robert, British Aerospace, Plymouth, Devon PL6 6DE (GB)
(74) Representative: Rooney, Paul Blaise

(56) References cited:
- GB-A- 2 144 261
- US-A- 4 503 543

## Description

The present invention relates to a lasing apparatus and relates particularly, but not exclusively, to a seal arrangement between two components of a lasing apparatus having different coefficients of expansion.

Presently known lasing apparatus include gas lasers and laser ring gyroscopes to name but two. In each type of lasing apparatus it is necessary to join one or more electrodes made from a material having a comparatively high co-efficient of expansion to a body having a comparatively low co-efficient of expansion in which a lasing cavity is formed. In a ring laser gyroscope, for example, the thermal mismatch at room temperature between aluminium electrodes having a co-efficient of expansion of 27x10⁻⁶/degree centigrade and a Zerodur (Trade Mark) body having a co-efficient of expansion of 5x10⁻⁸/degree centigrade is sufficient to tear most seals therebetween or the Zerodur (Trade Mark) apart and cause leakage of the lasing gas from the cavity.

GB-A-2144261 discloses a ring laser gyroscope having a gyro body housing a lasing cavity and a cathode member connected to the body by a cover forming a seal. The cover is connected to the cathode member at one portion and to the gyro body at another portion to provide a seal therebetween.

Other efforts have been made to solve the above mentioned problems but most relate to selecting electrode materials such as vitreous carbon, invar or aluminium coated ceramics which more closely match the co-efficient of expansion of the Zerodur body.

Unfortunately, such electrodes are expensive to make and their co-efficients of thermal expansion are not sufficiently close to that of Zerodur to avoid thermal mismatch at the extremes of temperature which a gyroscope might experience when in operation.

There therefore exist a requirement for an improved sealing arrangement between electrodes and bodies of a lasing apparatus which overcomes the problems associated with the above mentioned arrangements.

Accordingly, the present invention provides, a lasing apparatus having a body of relatively low thermal expansion rate for housing a lasing cavity and an electrode connected to the body by a seal, which seal comprises a first portion to which the electrode is electrically and mechically connected and a ring of thin wall material joined at a first end to the first portion and at a second end to the body at a seal/body interface, characterised in that the ring has a plurality of corrugations the axis of which is orthogonal to the plane of the seal/body interface.

The corrugations allow the seal to expand radially to accommodate electrode expansion and contraction without passing the stresses or radial expansion associated therewith into the joint between the body and the ring thereby avoiding compromising the structural integrity of the seal.

Advantageously, each corrugation comprises a radially inner and a radially outer curved portion and one or more substantially straight portions extending between said curved portion.

The straight portions should preferably extend substantially radially relative to a centre of the ring.

The ring may taper between the body and the electrode in order to more closely conform to the electrode shape.

For convenience, the electrode and the seal may be integral and the seal may be adhesively bonded to the body.

Advantageously, the electrode comprises a cathode.

The lasing apparatus may comprise a ring laser gyroscope.

The present invention will now be more particularly described by way of example only with reference to the accompanying drawings in which:

Figure 1 is a diagrammatic representation of a lasing apparatus in the form of a conventional ring laser gyroscope.

Figure 2 is a detailed cross-sectional elevation of a seal and electrode arrangement of a ring laser gyroscope incorporating the present invention.

Figure 3 is a cross-sectional plan view of the seal and electrode arrangement taken in the direction of arrows A-A in Figure 2.

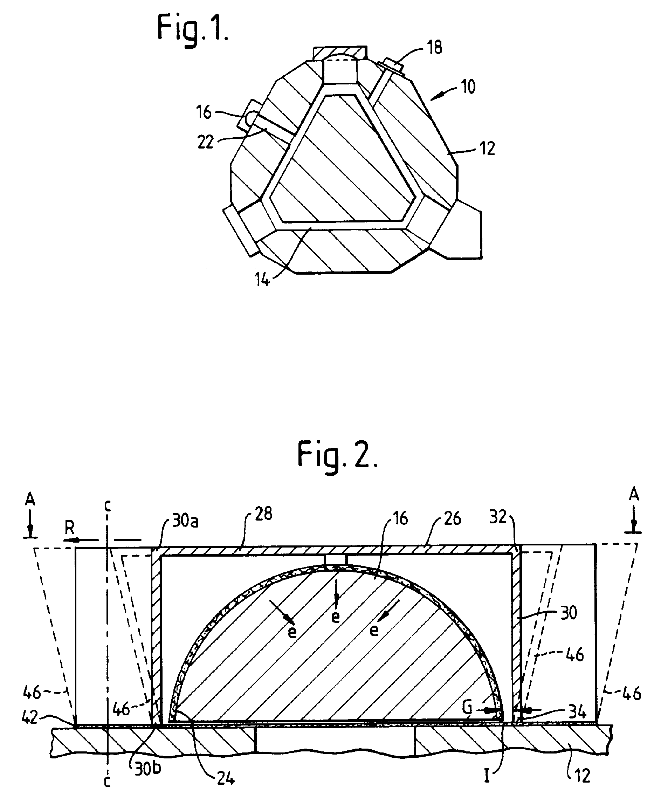

Referring now briefly to Figure 1, a ring laser gyroscope 10 comprises a body 12 of Zerodur (Trade Mark) in which a lasing cavity 14 is formed, a cathode 16, and one or more anodes 18 electrically connected to the cathode 16 for producing a flow of electrons through a vacuum formed in the lasing cavity 14. For a stable electrical discharge to run from the cathode 16 to the anode 18 a uniform field and current density must be maintained. This is achieved by having a cathode shape which allows a uniform field to be 'seen' by bore 22 in the body 12, down which the electrons emitted by the cathode must pass. Thus, the shape of the cathode is either hemispherical or semi-elliptical in cross section. To keep the current density down the emitting area must be as large as possible. Thus, the cathode is usually a relatively large, stiff dome shape. A layer of aluminium oxide 24 is provided over the surface of the cathode in order to prevent sputtering as the emitted electrons e emerge therefrom. The anode 18 can be flat, pin or dome shaped.

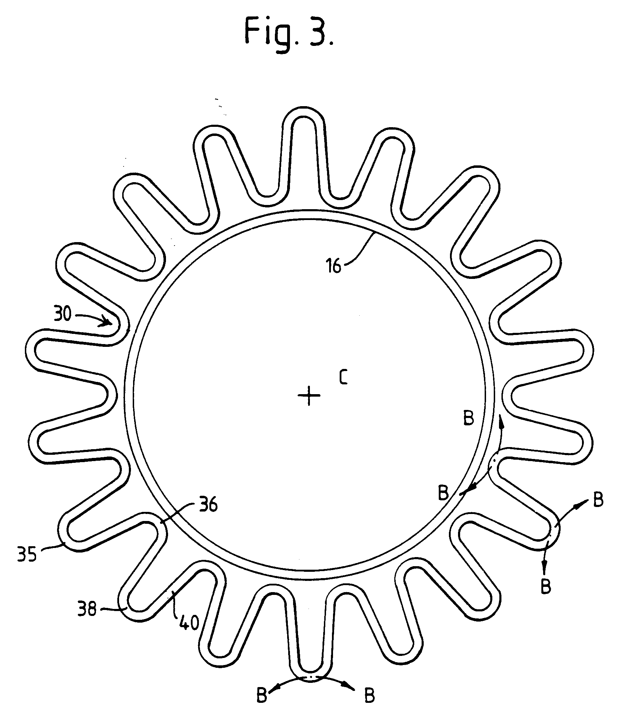

Turning now particularly to Figures 2 and 3, the cathode 16 is connected to the body 12 by seal 26. The seal itself comprises a first or upper portion 28 to which the top of the cathode 16 is electrically and mechanically connected and a ring 30 of thin wall corrugated material joined at a first end 32 to the upper portion and at an otherwise free end 34 to the body 12. The axis c-c of the corrugations 35 is orthogonal to the plane of the seal/body interface I. The particular arrangement illustrated in Figures 2 and 3 includes radially inner and radially outer curved portions 36, 38 and one or more substantially straight portions 40 extending substantially radially therebetween. It will however be appreciated that alternative corrugation shapes may be employed without departing from the operation of the inventive concept to be described below. The cathode 16 may be integrally joined to the seal 26 or may be joined by bolting or some other such similar arrangement to the centre thereof.

The seal itself 26 is adhesively bonded to the body 12 by for example a layer of indium 42. The seal 26 is made from the same or a similar material to the cathode 16 and hence experiences the same or similar expansion rates. The ring 30 may taper between the body 12 and the upper portion 28 in order to closely follow the shape of the electrode.

In operation the aluminium cathode 16 and seal upper portion 28 expand radially in the direction of arrows R by approximately 27x10⁻⁶/degree centigrade. This expansion rate is not matched by the Zerodur body 12 which expands at only 5x10⁻⁸/degree centigrade. Radial expansion of the seal upper portion results in hoop stresses being created in the corrugated ring 30. Under normal circumstances these hoop stresses would be transferred directly through to the seal/body interface I and could be sufficient to tear most joints apart and cause leakage of the lasing gas from the cavity. However, in the present arrangement, radial expansion of the seal upper portion 28 is accommodated by progressive radial expansion of the corrugated ring 30. When expansion takes place, the upper end 30a of the thin wall corrugations open out in the direction of arrows B in Figure 3 and effectively produce a flatter corrugated form. Expansion is progressive, that is to say it varies from a maximum at the upper end 30a to zero at the lower end 30b. The progressive expansion effect acts to relieve the hoop stresses which would normally be created and prevents these stresses being passed onto the seal/body interface I. The fully expanded position is shown in dotted lines at 46 in Figure 2.

It will be appreciated that by reducing and possibly eliminated radial expansion of the ring at the ring/body interface little or no stress will be induced in the adhesive 42 and hence the problem of bond breakage and seal destruction can be avoided. A gap G should be maintained between the cathode 16 and the walls 30 in order to allow for radial expansion of the cathode 16 relative to the fixed end 30b.

Whilst the above mentioned invention has been described exclusively within reference to a cathode, it will be appreciated that the invention is equally well suited to anodes 18. When the invention is applied to an anode 18 the seal itself could form the anode and no special shape is in fact required. All references to electrode in the description and claims are therefore references to cathodes or anodes.

For simplicity, the operation of the seal arrangement has been described with reference to expansion of the seal upper portion 2B. It will, however, be appreciated that contraction of the seal upper portion 28 is also accommodated in like manner.

## Claims

1. A lasing apparatus (10) having a body (12) of relatively low thermal expansion rate for housing a lasing cavity (14) and an electrode connected to the body (12) by a seal (26),which seal (26) comprises a first portion (28) to which the electrode is electrically and mechanically connected and a ring (30) of thin wall material joined at a first end (32) to the first portion (28) and at a second end (34) to the body (12) at a seal/body (12) interface (I), characterised in that the ring (30) has a plurality of corrugations the axis of which is orthogonal to the plane of the seal/body (12) interface (I).

2. A lasing apparatus (10) as claimed in claim 1 in which each corrugation (35) comprises a radially inner (36) and a radially outer curved portion (38) and one or more substantially straight portions (40) extending between said curved portions (36, 38).

3. A lasing apparatus (10) as claimed in claim 2 in which the straight portion (40) or portions extend substantially radially relative to a centre (C) of the ring (30).

4. A lasing apparatus (10) as claimed in any one of claims 1, 2 or 3 in which the ring (30) tapers between the body (12) and the electrode (16).

5. A lasing apparatus (10) as claimed in any one of claims 1 to 4 in which the electrode (16) and the seal (26) are integral.

6. A lasing apparatus (10) as claimed in any one of the claims 1 to 5 in which the seal (26) is adhesively bonded to the body (12).

7. A lasing apparatus (10) as claimed in any one of claims 1 to 6 in which the electrode (16) comprises a cathode (16).

8. A lasing apparatus (10) as claimed in any one of claims 1 to 7 in which the lasing apparatus (10) comprises a ring laser gyroscope (10).

## Patentansprüche

1. Laser-Apparat (10) mit einem Körper (12) aus einem Material mit relativ kleiner thermischer Ausdehnungsrate, der einen Laser-Hohlraum (14) beherbergt, und mit einer am Körper (12) über eine Dichtung (26) festgelegten Elektrode, wobei die Dichtung (26) einen ersten Abschnitt (28) aufweist, an dem die Elektrode elektrisch und mechanisch befestigt ist und die Dichtung außerdem einen Ring (30) aus dünnwandigem Material aufweist, der mit einem ersten Ende (32) an dem ersten Abschnitt (28) und an einem zweiten Ende (34) mit dem Körper (12) an der Zwischenfläche (I) zwischen Dichtung und Körper (12) verbunden ist,
dadurch gekennzeichnet, daß der Ring (30) eine Mehrzahl von Wellungen aufweist, deren Achsen senkrecht zur Ebene der Zwischenfläche (I) zwischen Dichtung und Körper (12) verlaufen.

2. Laser-Apparat (10) nach Anspruch 1, bei welchem jede Wellung (35) aus einem radial inneren (36) und einem radial äußeren gekrümmten Abschnitt (38) und einem oder mehreren im wesentlichen geraden Abschnitten (40) besteht, die zwischen den gekrümmten Abschnitten (36, 38) verlaufen.

3. Laser-Apparat (10) nach Anspruch 2, bei welchem der gerade Abschnitt (40) oder die geraden Abschnitte im wesentlichen radial zum Zentrum (C) des Ringes (30) verlaufen.

4. Laser-Apparat (10) nach einem der Ansprüche 1, 2 oder 3, bei welchem der Ring (30) sich zwischen dem Körper (12) und der Elektrode (16) verjüngt.

5. Laser-Apparat (10) nach einem der Ansprüche 1 bis 4, dadurch gekennzeichnet, daß Elektrode (16) und Dichtung (26) integral ausgebildet sind.

6. Laser-Apparat (10) nach einem der Ansprüche 1 bis 5, bei welchem die Dichtung (26) durch Verklebung mit dem Körper (12) verbunden ist.

7. Laser-Apparat (10) nach einem der Ansprüche 1 bis 6, bei welchem die Elektrode (16) eine Kathode (16) ist.

8. Laser-Apparat (10) nach einem der Ansprüche 1 bis 7, bei welchem der Laser-Apparat (10) ein Ringlaser-Gyroskop (10) ist.

## Revendications

1. Appareil laser (10) possèdant un corps (12) ayant un taux de dilatation thermique relativement faible et destiné à loger une cavité (14) pour émission laser, et une électrode connectée au corps (12) par l'intermédiaire d'un joint d'étanchéité (26), lequel joint d'étanchéité (26) comprend une première partie (28) à laquelle l'électrode est électriquement et mécaniquement connectée et un anneau (30) en matière pour paroi mince, joint à une première extrémité (32) à la première partie (28) et à une seconde extrémité (34) au corps (12), à une interface (I) joint d'étanchéité/corps (12), caractérisé en ce que l'anneau (30) comporte plusieurs ondulations dont les axes sont orthogonaux au plan de l'interface (I) joint d'étanchéité/corps (12).

2. Appareil laser (10) selon la revendication 1, dans lequel chaque ondulation (35) comprend une partie courbe radialement intérieure (36) et une partie courbe radialement extérieure (38), et une ou plusieurs parties sensiblement droites (40) s'étendant entre lesdites parties courbes (36, 38).

3. Appareil laser (10) selon la revendication 2, dans lequel la partie (40) ou les parties droite(s) s'étendent sensiblement radialement par rapport à un centre (C) de l'anneau (30).

4. Appareil laser (10) selon l'une quelconque des revendications 1, 2 ou 3, dans lequel l'anneau (30) se réduit entre le corps (12) et l'électrode (16).

5. Appareil laser (10) selon l'une quelconque des revendications 1 à 4, dans lequel l'électrode (16) et le joint d'étanchéité (26) sont solidaires.

6. Appareil laser (10) selon l'une quelconque des revendications 1 à 5, dans lequel le joint d'étanchéité (26) est fixé par adhérence au corps (12).

7. Appareil laser (10) selon l'une quelconque des revendications 1 à 6, dans lequel l'électrode (16) comprend une cathode (16).

8. Appareil laser (10) selon l'une quelconque des revendications 1 à 7, dans lequel l'appareil laser (10) comprend un gyromètre laser (10).
